# EUROPÄISCHE PATENTANMELDUNG

(11) **EP 3 524 420 A1**
(43) Veröffentlichungstag der Anmeldung: **14.08.2019**
(21) Anmeldenummer: 19155644.8
(22) Anmeldetag: 06.02.2019
(51) Int. Cl.: B30B 9/20, B30B 3/04, B01D 33/073

(54) **VORRICHTUNG ZUM TRENNEN VON MITEINANDER VERMISCHTEN STOFFEN UNTERSCHIEDLICHER FLIESSFÄHIGKEIT**

(30) Priorität: 07.02.2018 DE 102018102672
(71) Anmelder: NORDISCHER MASCHINENBAU RUD. BAADER GMBH + CO KG, 23560 Lübeck (DE)
(72) Erfinder: Evers, Reinhard, 23617 Stockelsdorf (DE)
(74) Vertreter: Stork Bamberger Patentanwälte PartmbB

(57) **Zusammenfassung**

Die Erfindung betrifft eine Vorrichtung (10) zum Trennen von miteinander vermischten Stoffen unterschiedlicher Fließfähigkeit, umfassend ein Rahmengestell (11), eine umlaufend angetriebene und am Rahmengstell (11) gelagerte Hohltrommel (12) mit perforierter Mantelfläche Mi, ein von außen im Bereich der Mantelfläche M₁ der Hohltrommel (12) liegendes Presselement (13), derart, dass die Hohltrommel (12) und das Presselement (13) einen Produkt-Einzugskeil (14) zum Leiten eines aus Pressgut bestehenden Produktstroms zwischen die Hohltrommel (12) und das Presselement (13) bilden, eine Zuführeinheit (15) zum Zuführen des Produktstroms in den Bereich des Produkt-Einzugskeils (14), sowie ein Abstreifmittel (16) zum Abstreifen des Pressguts von der Hohltrommel (12), die sich dadurch auszeichnet, dass das Presselement (13) ebenfalls eine Hohltrommel (17) ist, wobei mindestens eine der Hohltrommeln (12, 17) relativ bewegbar zur anderen Hohltrommel (12, 17) am Rahmengestell (11) angeordnet ist.

## Beschreibung

Die Erfindung betrifft eine Vorrichtung zum Trennen von miteinander vermischten Stoffen unterschiedlicher Fließfähigkeit, umfassend ein Rahmengestell, eine umlaufend angetriebene und am Rahmengstell gelagerte Hohltrommel mit perforierter Mantelfläche M₁, ein von außen im Bereich der Mantelfläche der Hohltrommel liegendes Presselement, derart, dass die Hohltrommel und das Presselement einen Produkt-Einzugskeil zum Leiten eines aus Pressgut bestehenden Produktstroms zwischen die Hohltrommel und das Presselement bilden, eine Zuführeinheit zum Zuführen des Produktstroms in den Bereich des Produkt-Einzugskeils, sowie ein Abstreifmittel zum Abstreifen des Pressguts von der Hohltrommel.

Solche Vorrichtungen kommen in verschiedenen Industriebereichen, insbesondere jedoch in der Lebensmittelindustrie zum Einsatz. Mit den zuvor beschriebenen Vorrichtungen, die auch als Trenneinrichtungen oder Separatoren bezeichnet werden, lassen sich verschiedenartige Stoffe einem Separierprozess unterziehen. Dazu werden die zu trennenden Stoffe, also das Pressgut bzw. Trenngut, von außen mittels des Presselementes gegen die perforierte Mantelfläche der Hohltrommel gedrückt. Unter diesem Druck werden die leichter fließenden Bestandteile des Pressguts durch die Perforation der Mantelfläche in den inneren Hohlraum der rotierenden Hohltrommel gepresst, während die schwerer fließenden Bestandteile des Pressgutes außen auf der Mantelfläche der Hohltrommel verbleiben.

Einer solchen Trennung zugänglich sind Stoffe, Materialien bzw. Produkte, die sich bzw. deren Zusammensetzung sich durch ihr voneinander abweichendes Fließverhalten unterscheiden. Die Möglichkeit und/oder Notwendigkeit der Trennung von miteinander vermischten Stoffen unterschiedlicher Fließfähigkeit besteht z.B. bei der Verwertung von Tierkörpern (etwa der Abtrennung des Fleisches von der Haut, Sehnen, Flechten, Knochen bzw. Gräten etc.) oder Teilen davon, bei der Verwertung von Obst und Gemüse (etwa der Abtrennung des Fruchtfleisches von Schale, Stielen, Kernen bzw. Steinen etc.), bei der Aufarbeitung von fehlverpackten Lebensmitteln (etwa der Abtrennung von Butter oder Käse vom Verpackungsmaterial) oder dergleichen. Konkrete Anwendungsbeispiele sind z.B. das Entkernen von Datteln oder das Entpacken von in Folie verpackten Käsescheiben.

Beim Entkernen oder Entpacken oder jedem anderen entsprechenden Separieren wird ein Produktstrom ausgehend von einem Produktzuführbereich zwischen dem Presselement und der Hohltrommel hindurch zu einem Produktausgabebereich gefördert. Dabei werden die Stoffe unterschiedlicher Fließfähigkeit getrennt, in dem die leichter fließenden Stoffe, am Beispiel der Verwertung der Tierkörper oder Teilen davon das Fleisch, mindestens teilweise in die Hohltrommel gedrückt und von dort abgeführt werden. Die schwerer fließenden Stoffe, wiederum am Beispiel der Verwertung der Tierkörper oder Teilen davon die Knochen, Sehnen, Haut etc., werden in Transportrichtung T des Produktstroms hinter der Hohltrommel im Produktausgabebereich gesammelt und abgeführt. Der durch die perforierte Mantelfläche ins Innere der Hohltrommel gedrückte Anteil des Pressguts wird abgeführt und zur Weiterverarbeitung geleitet. Allerdings haftet der nicht durch die perforierte Mantelfläche ins Innere der Hohltrommel gedrückte Reststrom des Produktstroms einschließlich der schwerer fließenden Bestandteile üblicherweise mindestens teilweise außen an der Mantelfläche der Hohltrommel. Dieser außen an der Hohltrommel anhaftende Reststrom wird durch das Abstreifmittel gelöst.

Als Presselement sind so genannte Pressbänder bekannt. Die üblicherweise endlosen Pressbänder sind mindestens teilweilweise um einen Teil des Umfangs der perforierten Hohltrommel geschlungen. Um das vorzugsweise aus einem elastischen Werkstoff bestehende Pressband gegen die perforierte Hohltrommel zu drücken, sind auf der der perforierten Hohltrommel entgegengesetzten Seite des Pressbandes Stützvorrichtungen vorgesehen. Die Stützvorrichtungen sind als Walzen, Stützband, Stützkette oder dergleichen ausgebildet. Im Bereich der Umschlingung ist zwischen der perforierten Hohltrommel und dem Pressband eine flächige Druckzone gebildet. Durch den beim Separierprozess auftretenden Druck zwischen Pressband und perforierter Hohltrommel einerseits und der beim Separierprozess auftretenden Reibung zwischen dem Pressband und der Hohltrommel andererseits kommt es zu einem erheblichen Verschleiß insbesondere des Pressbandes, das entsprechend regelmäßig ausgetauscht werden muss. Die Stillstandzeiten führen des Weiteren zu einem Leistungsverlust der Vorrichtung.

Der Erfindung liegt somit die Aufgabe zugrunde, eine verschleißarme Vorrichtung mit verbesserter Leistungsfähigkeit zu schaffen.

Diese Aufgabe wird durch eine Vorrichtung der eingangs genannten Art dadurch gelöst, dass das Presselement ebenfalls eine Hohltrommel ist, wobei mindestens eine der Hohltrommeln relativ bewegbar zur anderen Hohltrommel am Rahmengestell angeordnet ist. Durch die Ausbildung des Presselementes als Hohltrommel kann auf das Pressband als Verschleißteil verzichtet werden. Mit der Hohltrommel als Presselement wird zum einen eine linienförmige Druckzone geschaffen, die das sichere Pressen des Produktstroms durch die perforierte Mantelfläche gewährleistet, und zum anderen ein Presselement höherer Standzeit zur Verfügung gestellt, wodurch die Leistungsfähigkeit der Vorrichtung gesteigert wird. Durch die relative Bewegbarkeit einer der Hohltrommeln zur anderen Hohltrommel kann auf unterschiedliche Produktströme, deren Beschaffenheit und Zusammensetzung reagiert werden, so dass für jeden Produktstrom zum Erreichen einer maximalen Leistungsfähigkeit der ideale Druck erzeugt werden kann.

Bevorzugt ist eine der Hohltrommeln federbelastet bzw. gegen eine Feder beweglich am Rahmengestell angeordnet. Es können auch beide Hohltrommeln gegen eine Feder beweglich am Rahmengestell angeordnet sein, z.B. mit gleicher Federkraft oder mit unterschiedlichen Federkräften. Besonders bevorzugt ist die perforierte Hohltrommel ortsfest am Rahmengestell und die als Presselement ausgebildete Hohltrommel bewegbar am Rahmengestell angeordnet. Die perforierte Hohltrommel ist entsprechend starr, während die als Presselement ausgebildete Hohltrommel insbesondere durch den Produktstrom ausweichend gegen die perforierte Hohltrommel gespannt ist. Die als Presselement ausgebildete Hohltrommel kann gegen die Mantelfläche M₁ der perforierten Hohltrommel gespannt sein, also an dieser anliegen, oder mit einem Abstand zur Mantelfläche M₁ vorgespannt sein, wobei der Abstand zum einen einstellbar ist und zum anderen durch den zwischen Presselement und perforierter Hohltrommel strömenden Produktstrom veränderbar ist. Mit dieser Ausbildung und Anordnung wird ein verschleißarmer Separierprozess gewährleistet. Eine bevorzugte Weiterbildung zeichnet sich dadurch aus, dass die als Presselement ausgebildete Hohltrommel ebenfalls eine perforierte Mantelfläche M₂ aufweist. Dadurch können der Produktstrom bzw. der fließfähige Anteil des Produktstroms zu beiden Seiten abfließen. Anders ausgedrückt stehen mehr Öffnungen zur Verfügung, so dass die Vorrichtung eine höhere Leistungsfähigkeit aufweist.

Vorteilhafterweise ist auch der als Presselement ausgebildeten Hohltrommel ein Abstreifmittel zum Abstreifen des Pressguts zugeordnet. Dadurch werden beide perforierten Hohltrommeln äußerlich frei vom Restpressgut gehalten, was zum einen - bedingt durch einen reduzierten Druck - den Verschleiß der Hohltrommeln reduziert und zum anderen - aufgrund freier Öffnungen in der perforierten Mantelfläche - zu einer höheren Leistungsfähigkeit führt.

Eine vorteilhafte Ausgestaltung der Erfindung zeichnet sich dadurch aus, dass die beiden Hohltrommeln gegenläufig antreibbar sind. Dadurch wird der Produktstrom aus dem Produkt-Einzugskeil zuverlässig zwischen die Hohltrommeln gezogen.

Eine besonders bevorzugte Weiterbildung ist dadurch gekennzeichnet, dass die beiden Hohltrommeln zur Erzeugung einer Differenzgeschwindigkeit mit unterschiedlichen Geschwindigkeiten antreibbar sind. Dadurch kann der Produktstrom zuverlässig in die Öffnungen der beiden perforierten Mantelflächen M₁ und M₂ gerieben werden, wodurch eine besser Ausbeute erzielt wird.

Vorteilhafterweise sind die beiden Hohltrommeln an eine Steuerungs- und/oder Regelungseinheit zur Steuerung und/oder Regelung der Drehrichtung und/oder der Drehgeschwindigkeit angeschlossen. Dadurch kann zur Erhöhung der Leistungsfähigkeit individuell auf den Produktstrom und dessen Beschaffenheit sowie Zusammensetzung reagiert werden.

Eine zweckmäßige Ausführungsform ist dadurch gekennzeichnet, dass die beiden Hohltrommeln aus demselben Material hergestellt sind und die gleiche Oberflächenhärte aufweisen. Das führt zu einem einheitlichen Verschleiß der beiden Hohltrommel, was zu einer verbesserten Laufruhe und damit zur Reduzierung des Verschleißes führt.

Besonders bevorzugt ist die Zuführeinheit als Zuführtrichter ausgebildet, derart, dass die in Förderrichtung des Produktstroms weisende Öffnung des Trichters in den Produkt-Einzugskeil mündet. Damit ist eine sichere Versorgung der Vorrichtung mit einem ausreichend großen Produktstrom gewährleistet.

Eine bevorzugte Weiterbildung zeichnet sich dadurch aus, dass die Zuführeinheit durch zwei Zuführbänder gebildet ist, die oberhalb des Produkt-Einzugskeils angeordnet sind und konvergierend auf diesen zulaufen, wobei mindestens ein Zuführband antreibbar ist. Mit dieser Ausführung wird zuverlässig sichergestellt, dass der Produktstrom aktiv in Richtung des Produkt-Einzugskeils gefördert wird, so dass eine optimale Versorgung der Vorrichtung sichergestellt ist.

Vorteilhafterweise sind beide Zuführbänder antreibbar. Dadurch erhöht sich der zuvor geschilderte Effekt.

Weitere zweckmäßige und/oder vorteilhafte Merkmale und Weiterbildungen der Vorrichtung ergeben sich aus den Unteransprüchen und der Beschreibung. Besonders bevorzugte Ausführungsformen der Vorrichtung werden anhand der beigefügten Zeichnung näher erläutert. In der Zeichnung zeigt:
- Fig. 1: eine schematische Darstellung einer ersten Ausführungsform der Vorrichtung mit einer Trommel als Presselement,
- Fig. 2: eine weitere Ausführungsform der Vorrichtung gemäß Figur 1, und
- Fig. 3: eine weitere Ausführungsform der Vorrichtung gemäß Figur 1.

Die in der Zeichnung dargestellte Vorrichtung dient zum Trennen von Fleisch einerseits und Knochen, Knochenresten, Sehnen, Knorpeln und dergleichen andererseits. Die Vorrichtung kann jedoch in gleicher Weise auch zum Tennen z.B. von Fruchtfleisch von Kernen oder zum Trennen jeglicher anderen vermischten Stoffe unterschiedlicher Fließfähigkeit eingesetzt werden.

Die dargestellte Vorrichtung 10 ist zum Trennen von miteinander vermischten Stoffen unterschiedlicher Fließfähigkeit ausgebildet und eingerichtet. Die Vorrichtung 10 umfasst ein Rahmengestell 11, eine umlaufend angetriebene und am Rahmengstell 11 gelagerte Hohltrommel 12 mit perforierter Mantelfläche M₁ und ein von außen im Bereich der Mantelfläche M₁ der Hohltrommel 12 liegendes Presselement 13. Die Hohltrommel 12 und das Presselement 13 bilden zwischen sich einen Produkt-Einzugskeil 14 zum Leiten eines aus Pressgut bestehenden Produktstroms zwischen die Hohltrommel 12 und das Presselement 13. Die Vorrichtung 10 umfasst weiterhin eine Zuführeinheit 15 zum Zuführen des Produktstroms in den Bereich des Produkt-Einzugskeils 14 sowie ein Abstreifmittel 16 zum Abstreifen des Pressguts von der Hohltrommel 12.

Das Rahmengestell 11 kann z.B. ein Gehäuse oder eine Profilkonstruktion oder dergleichen sein. Am oder im Rahmengestell 11 ist die (nicht dargestellte) Antriebseinheit für die Hohltrommel 12 und/oder das Presselement 13 angeordnet.

Diese Vorrichtung 10 zeichnet sich erfindungsgemäß dadurch aus, dass das Presselement 13 ebenfalls eine Hohltrommel 17 ist, wobei mindestens eine der Hohltrommeln 12, 17 relativ bewegbar zur anderen Hohltrommel 17, 12 am Rahmengestell 11 angeordnet ist. Optional können beide Hohltrommeln 12, 17 bewegbar am Rahmengestell 11 gelagert sein. Eine Möglichkeit der bewegbaren Anordnung kann durch eine Feder realisiert sein, derart, dass die oder jede Hohltrommel 12, 17 gegen eine Feder bewegbar ist. Die Federn können die gleiche oder eine unterschiedliche Federkraft aufweisen. Eine andere Möglichkeit der bewegbaren Anordnung kann z.B. über eine Pneumatik- oder Hydraulikeinheit umgesetzt sein.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig die weiter oben beschriebene Vorrichtung 10 weiterbilden können.

Die beiden Hohltrommeln 12, 17 können den gleichen Durchmesser oder unterschiedliche Durchmesser aufweisen. Bevorzugt sind Durchmesser von 20 bis 40 cm. Es sind jedoch auch kleinere und insbesondere größere Durchmesser z.B. von 40 bis 60 cm bevorzugt. Die Hohltrommeln 12, 17 sind vorzugsweise derart nebeneinander angeordnet, dass ihre Rotationsachsen R₁, R₂ zum einen horizontal verlaufen und zum anderen parallel zueinander ausgerichtet sind. Beide Hohltrommeln 12, 17 können im Wartezustand, also ohne Produktstrom bzw. Pressgut zwischen sich, zur Bildung eines linienförmigen Druckbereichs aneinanderliegen. Die Hohltrommeln 12, 17 können aber auch in einem Abstand zueinander liegen, wobei die Größe des Abstandes einstellbar ist.

Bevorzugt ist die perforierte Hohltrommel 12 ortsfest am Rahmengestell 11 und die andere, als Presselement 13 ausgebildete Hohltrommel 17 relativ zur ortsfesten Hohltrommel 12 bewegbar am Rahmengestell 11 angeordnet. Mit anderen Worten ist die perforierte Hohltrommel 12 starr mit dem Rahmengestell 11 verbunden, während die das Presselement 13 bildende Hohltrommel 17 gegen eine Federkraft oder dergleichen insbesondere durch den Produktstrom von der perforierten Hohltrommel 12 weg und mit der Federkraft oder dergleichen auf die perforierte Hohltrommel 12 zu bewegbar ist. Die Bewegung der bewegbaren Hohltrommel 17 ist vorzugsweise zwangsgeführt, beispielsweise in einer Kulisse, einem Langloch oder dergleichen.

Besonders bevorzugt weist die als Presselement 13 ausgebildete Hohltrommel 17 ebenfalls eine perforierte Mantelfläche M₂ auf. Die Lochbilder der beiden Hohltrommeln 12, 17 können identisch sein. Optional können die Hohltrommeln 12, 17 auch mit unterschiedlichen Lochbildern ausgestattet sein. Die Unterschiedlichkeit der Lochbilder bzw. Lochmuster bezieht sich zum einen auf die Verteilung der Löcher und zum anderen auf die Größe der Durchmesser der Löcher. Dadurch, dass beide Hohltrommeln 12, 17 eine perforierte Mantelfläche M₁, M₂ aufweisen, kann das leichter fließende Material zu beiden Seiten in eine der Hohltrommeln 12, 17 gepresst werden. Das schwerer fließende Material, das außen an den Mantelflächen M₁, M₂ verbleibt, wird weitertransportiert und mit Bezug auf die perforierte Hohltrommel 12 mittels des Abstreifmittels 16 abgestreift. Bevorzugt ist auch der als Presselement 13 ausgebildeten Hohltrommel 17 ein Abstreifmittel 18 zum Abstreifen des Pressguts zugeordnet.

In der dargestellten Ausführungsform weist eine der beiden Hohltrommeln 12, 17 einen umlaufenden Rand 23 bzw. Kragen auf, derart, dass die andere Hohltrommel 17, 12 mit der Stirnfläche 24, die ebenfalls durch einen Rand gebildet sein kann, von hinten/innen am Rand der anderen Hohltrommel 12, 17 anliegt. Mit anderen Worten bildet sich im Kontaktbereich/Überlappungsbereich eine Art Dichtfläche, die jedoch auch auf andere Weise ausgebildet sein kann.

Mittels einer Antriebseinheit sind die Hohltrommeln 12, 17 rotierend um ihre Rotationsachse R₁, R₂ antreibbar. Die Drehrichtung ist frei wählbar. Bevorzugt sind beide Hohltrommeln 12, 17 gegenläufig antreibbar, derart, dass der Produktstrom von oben nach unten in den Produkt-Einzugskeil 14 eingezogen wird. Die Drehgeschwindigkeit der Hohltrommeln 12, 17 ist ebenfalls frei wählbar. Im Wartezustand sind die Drehgeschwindigkeiten bevorzugt gleich gewählt. Im Funktionszustand, also wenn ein Produktstrom verarbeitet wird, sind die beiden Hohltrommeln 12, 17 zur Erzeugung einer Differenzgeschwindigkeit mit unterschiedlichen Geschwindigkeiten antreibbar. Dazu sind die beiden Hohltrommeln 12, 17 bzw. die Antriebseinheit an eine (nicht dargestellte) Steuerungs- und/oder Regelungseinheit zur Steuerung und/oder Regelung der Drehrichtung und/oder der Drehgeschwindigkeit angeschlossen.

Jede Hohltrommel 12, 17 kann individuell gefertigt und aus einem beliebigen, in der Nahrungsmittel verarbeitenden Industrie zugelassenen Werkstoff hergestellt sein. Bevorzugt sind die beiden Hohltrommeln 12, 17 aus demselben Material hergestellt. Besonders geeignet bestehen die Hohltrommeln 12, 17 aus Edelstahl. Es können auch oberflächenbeschichtete und/oder oberflächengehärtete Hohltrommeln 12, 17 eingesetzt werden. Die Oberflächenhärte der beiden Hohltrommeln 12, 17 kann bewusst unterschiedlich gewählt. Vorzugsweise weisen beide Hohltrommeln 12, 17 die gleiche Oberflächenhärte auf.

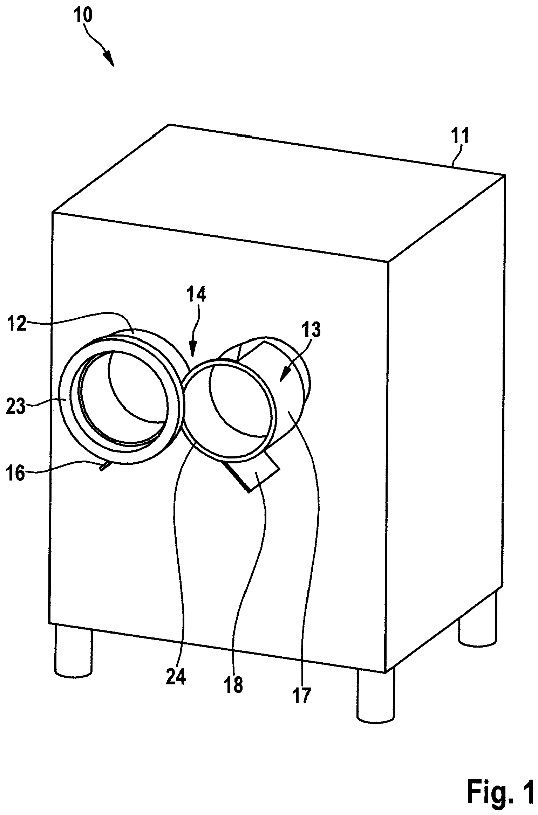

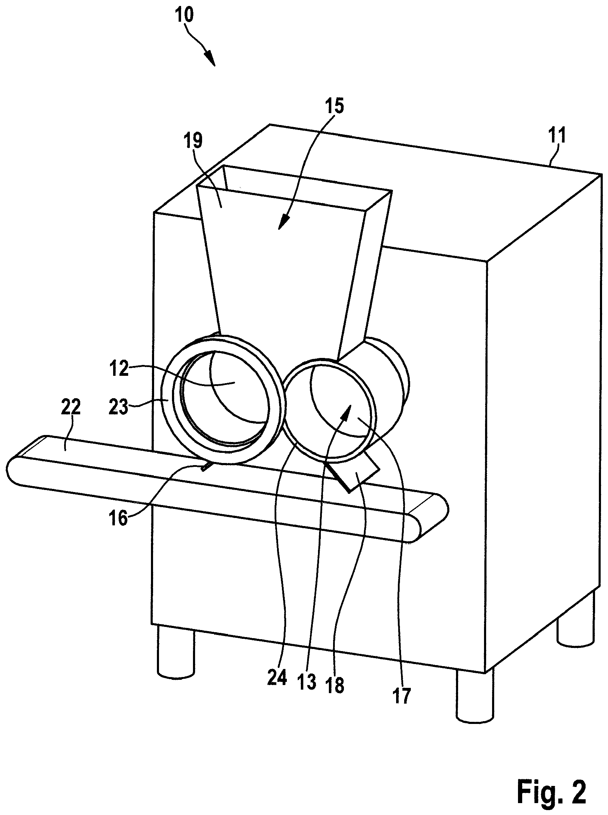

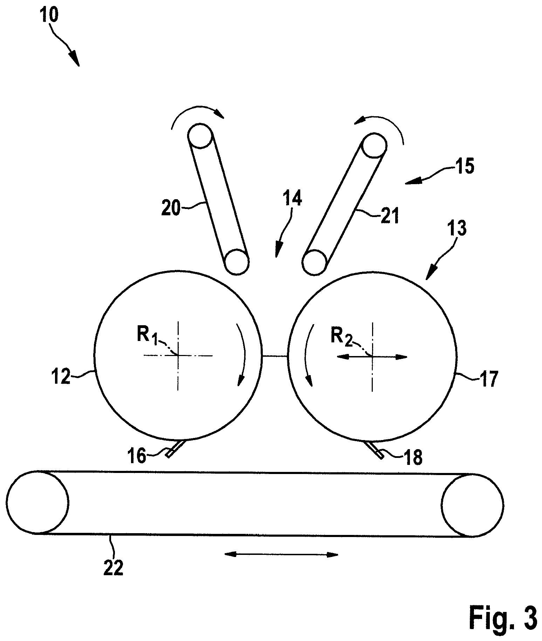

In der Ausführungsform gemäß Figur 1 kann der Produktstrom direkt in den Produkt-Einzugskeil 14 gefördert werden. Bevorzugt ist die Zuführeinheit 15 als Zuführtrichter 19 ausgebildet (siehe Figur 2), derart, dass die in Förderrichtung des Produktstroms weisende Öffnung des Zuführtrichters 19 in den Produkt-Einzugskeil 14 mündet. In der Ausführungsform gemäß Figur 3 ist die Zuführeinheit 15 durch zwei Zuführbänder 20, 21 gebildet ist, die oberhalb des Produkt-Einzugskeils 14 angeordnet sind. Bevorzugt laufen die beiden Zuführbänder 20, 21 konvergierend auf den Produkt-Einzugskeil 14 zu. Die Zuführbänder 20, 21 können als passives Leitmittel dienen. Bevorzugt ist jedoch mindestens ein Zuführband 20, 21 mittels eines (nicht dargestellten) Antriebsmittels antreibbar. Optional sind sogar beide Zuführbänder 20, 21 antreibbar. Die Antriebsrichtung und Antriebsgeschwindigkeit ist steuer- und/oder regelbar. In anderen, nicht explizit dargestellten Ausführungsformen kann die Zuführeinheit 15 auch eine Schnecke oder dergleichen umfassen.

Das durch die perforierte Mantelflächen M₁ und M₂ der Hohltrommeln 12, 17 gepresste Pressgut kann aus dem Inneren der Hohltrommeln 12,17 geleitet und weiterverarbeitet werden. Das zwischen den Hohltrommeln 12, 17 nach unten abgeführte Restmaterial kann durch Schwerkraft z.B. in einen Behälter oder optional auf ein Transportband 22 oder dergleichen fallen und abtransportiert werden. Gleiches gilt für das mittels der Abstreifmittel 16, 18 von den Mantelflächen M₁ und M₂ abgekratzte Restmaterial.

## Patentansprüche

1. Vorrichtung (10) zum Trennen von miteinander vermischten Stoffen unterschiedlicher Fließfähigkeit, umfassend ein Rahmengestell (11), eine umlaufend angetriebene und am Rahmengstell (11) gelagerte Hohltrommel (12) mit perforierter Mantelfläche M₁, ein von außen im Bereich der Mantelfläche M₁ der Hohltrommel (12) liegendes Presselement (13), derart, dass die Hohltrommel (12) und das Presselement (13) einen Produkt-Einzugskeil (14) zum Leiten eines aus Pressgut bestehenden Produktstroms zwischen die Hohltrommel (12) und das Presselement (13) bilden, eine Zuführeinheit (15) zum Zuführen des Produktstroms in den Bereich des Produkt-Einzugskeils (14), sowie ein Abstreifmittel (16) zum Abstreifen des Pressguts von der Hohltrommel (12), **dadurchge** k**ennzeichnet**, dass das Presselement (13) ebenfalls eine Hohltrommel (17) ist, wobei mindestens eine der Hohltrommeln (12, 17) relativ bewegbar zur anderen Hohltrommel (12, 17) am Rahmengestell (11) angeordnet ist.

2. Vorrichtung (11) nach Anspruch 1, **dadurch gekennzeichnet, dass** die perforierte Hohltrommel (12) ortsfest am Rahmengestell (11) und die als Presselement (13) ausgebildete Hohltrommel (17) bewegbar am Rahmengestell (11) angeordnet ist.

3. Vorrichtung (10) nach Anspruch 1 oder 2, **dadurch gekennzeichnet, dass** die als Presselement (13) ausgebildete Hohltrommel (17) ebenfalls eine perforierte Mantelfläche M₂ aufweist.

4. Vorrichtung (10) nach einem oder mehreren der Ansprüche 1 bis 3, **dadurch gekennzeichnet, dass** auch der als Presselement (13) ausgebildeten Hohltrommel (17) ein Abstreifmittel (18) zum Abstreifen des Pressguts zugeordnet ist.

5. Vorrichtung (10) nach einem oder mehreren der Ansprüche 1 bis 4, **dadurch gekennzeichnet, dass** die beiden Hohltrommeln (12, 17) gegenläufig antreibbar sind.

6. Vorrichtung (10) nach einem oder mehreren der Ansprüche 1 bis 5, **dadurch gekennzeichnet, dass** die beiden Hohltrommel (12, 17) zur Erzeugung einer Differenzgeschwindigkeit mit unterschiedlichen Geschwindigkeiten antreibbar sind.

7. Vorrichtung (10) nach einem oder mehreren der Ansprüche 1 bis 6, **dadurch gekennzeichnet, dass** die beiden Hohltrommeln (12, 17) an eine Steuerungs- und/oder Regelungseinheit zur Steuerung und/oder Regelung der Drehrichtung und/oder der Drehgeschwindigkeit angeschlossen sind.

8. Vorrichtung (10) nach einem oder mehreren der Ansprüche 1 bis 7, **dadurch gekennzeichnet, dass** die beiden Hohltrommeln (12, 17) aus demselben Material hergestellt sind und die gleiche Oberflächenhärte aufweisen.

9. Vorrichtung (10) nach einem oder mehreren der Ansprüche 1 bis 8, **dadurch gekennzeichnet, dass** die Zuführeinheit (15) als Zuführtrichter (19) ausgebildet ist, derart, dass die in Förderrichtung des Produktstroms weisende Öffnung des Trichters in den Produkt-Einzugskeil (14) mündet.

10. Vorrichtung (10) nach einem oder mehreren der Ansprüche 1 bis 8, **dadurch gekennzeichnet, dass** die Zuführeinheit (15) durch zwei Zuführbänder (20, 21) gebildet ist, die oberhalb des Produkt-Einzugskeils (14) angeordnet sind und konvergierend auf diesen zulaufen, wobei mindestens ein Zuführband (20, 21) antreibbar ist.

11. Vorrichtung (10) nach Anspruch 10, **dadurch gekennzeichnet, dass** beide Zuführbänder (20, 21) antreibbar sind.
